# EUROPÄISCHE PATENTSCHRIFT

(11) **EP 1 356 886 B1**
(45) Veröffentlichungstag und Bekanntmachung des Hinweises auf die Patenterteilung: **03.11.2004**
(21) Anmeldenummer: 03006628.6
(22) Anmeldetag: 25.03.2003
(51) Int. Cl.: B23C 3/18

(54) **Fräsverfahren**
Milling method
Procédé de fraisage

(30) Priorität: 27.04.2002 DE 10219012
(43) Veröffentlichungstag der Anmeldung: 29.10.2003
(73) Patentinhaber: MTU Aero Engines GmbH, 80995 München (DE)
(72) Erfinder: Lebküchner, Götz, 82110 Germering (DE)
(74) Vertreter: Lindner-Vogt, Karin, Dipl.-Phys.

(56) Entgegenhaltungen:
- US-A- 4 260 304
- US-A- 6 077 002

## Beschreibung

Die Erfindung betrifft ein Fräsverfahren zur Fertigung von Bauteilen aus schwer zerspanbaren Werkstoffen für Turbomaschinen, Luft- und Raumfahrzeuge, gemäß dem Oberbegriff des Patentanspruches 1.

Ein solches Fräsverfahren ist aus der US-Patentschrift 6,077,002 bekannt. Dieses Patent sieht de facto eine Schruppbearbeitung durch sogenanntes Zeilen im Vollschnitt vor. Dabei werden in der Regel mehrere, seitlich versetzte Nuten (Zeilen) gefräst, wobei die Bearbeitung der jeweils äußersten Nuten die Erzeugung der Seitenwandkonturen mit beinhaltet. Hierfür wird mindestens ein an der Spitze und am Umfang schneidendes Fräswerkzeug verwendet, d.h. ein entsprechender Schaftfräser. Tiefere Kanäle werden in mehreren Zustellschritten in Fräserlängsrichtung bearbeitet, einschließlich des mehrfachen seitlichen Nutenversatzes. Das wichtigste Anwendungsgebiet für dieses Verfahren sind integral beschaufelte Rotorscheiben, sogenannte Blisks (Blades Disks), für Gasturbinen. Bei den im Gasturbinenbau für Rotoren üblichen, hochfesten und schwer zerspanbaren Werkstoffen hat besagtes Verfahren gravierende Nachteile, wie ein geringes Zerspanvolumen je Zeiteinheit, einen hohen Werkzeugverschleiß, hohe Kosten und somit letztlich eine geringe Wirtschaftlichkeit.

Demgegenüber besteht die Aufgabe der Erfindung darin, ein Fräsverfahren für schwer zerspanbare Werkstoffe vorzuschlagen, welches dem vorstehend genannten Verfahren in allen wichtigen Kriterien deutlich überlegen ist.

Diese Aufgabe wird durch die in Anspruch 1 gekennzeichneten Merkmale gelöst, in Verbindung mit den gattungsbildenden Merkmalen in dessen Oberbegriff. Der entscheidende Unterschied ist darin zu sehen, dass das Werkzeug zusätzlich zur zentrischen Rotation um seine Längsmittelachse eine exzentrische Kreisbewegung um eine definierte Kreisbahnachse ausführt. Durch entgegengesetzten Drehsinn von Rotation und Kreisbewegung ergibt sich ein werkzeug- und werkstückschonendes Gleichlauffräsen. Durch Überlagerung der exzentrischen Kreisbewegung mit einer translatorischen Vorschubbewegung entspricht die Bahnkurve der Fräserspitzenmitte einer Zykloide, d.h. der Kurve eines fest mit einem auf ebener bzw. gekrümmter Bahn rollenden Körper verbundenen Punktes, wobei der Radius des Punktes vom Rollradius verschieden sein kann.

Zur optimalen Anschmiegung des Fräswerkzeuges an nicht vertikale Seitenwände, d.h. zur Kreisbahnachse nicht parallele Seitenwände, kann die Achse des Fräswerkzeugs bei jedem Kreisbahnumlauf periodisch im Sinne einer Taumelbewegung um einen definierten Achspunkt im Bereich der Fräserspitze geschwenkt werden, wobei die Achse zeitweilig parallel zu den Seitenwandtangenten steht. Bei zur Kreisbahnachse parallelen Seitenwänden ist dieses Taumeln nicht erforderlich. Mit der erfindungsgemäßen Frässtrategie ist eine Bearbeitung aus dem Vollen mit Schlichtparametern realisierbar, d.h. mit hoher Schnittgeschwindigkeit, mäßiger Werkzeugbelastung, reduziertem Verschleiß und der Möglichkeit großer Tiefenzustellung. Das Zerspanvolumen pro Zeiteinheit übertrifft die bekannten Schruppverfahren um ein Vielfaches, was die Wirtschaftlichkeit entsprechend erhöht.

In den Unteransprüchen sind bevorzugte Ausgestaltungen des Fräsverfahrens nach dem Hauptanspruch gekennzeichnet.

Die Erfindung wird anschließend anhand der Zeichnung noch näher erläutert. Dabei zeigen in vereinfachter, nicht maßstäblicher Darstellung:
Figur 1 eine radiale Ansicht eines örtlich bearbeiteten Bauteils in Gestalt eines integral zu beschaufelnden Gasturbinenrotors.
Figur 2 einen Teilschnitt gemäß dem Verlauf AB - AB in Figur 1, und
Figur 3 ein Fräswerkzeug mit alternativer Spitzenkontur.

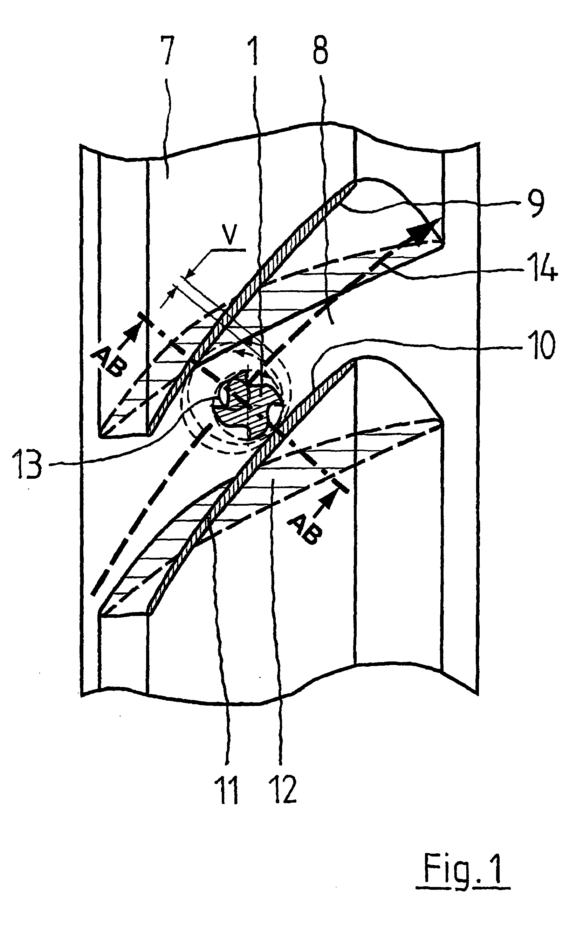

Das Bauteil 7, hier beispielhaft in Gestalt eines integral zu beschaufelnden Gasturbinenrotors in Axialbauweise, wird gemäß Figur 1 etwa in Längsrichtung des Fräswerkzeuges 1 betrachtet. Im dargestellten Bearbeitungszustand ist erst eine Vertiefung 8 zwischen zwei sich gegenüberstehenden Seitenwänden 9, 10 gefertigt. Im Endzustand wird eine Vielzahl von Vertiefungen 8 gleichmäßig über den Bauteilumfang verteilt sein, jeweils getrennt von einer identischen Anzahl von Schaufeln. Die Vertiefungen 8 bilden dann die Strömungskanäle, die Seitenwände 9,10 jeweils die Druck- und Saugseiten der Schaufeln. Zum besseren Verständnis sind in Figur 1 Schaufelprofile 11,12 eingezeichnet, wobei 11 das Profil an der Schaufelspitze, 12 das Profil an der Schaufelwurzel sein soll. Hier wird deutlich, dass die Seitenflächen 9,10 räumliche Flächen mit variierenden Krümmungsradien sind. Dies soll zeigen, dass mit dem erfindungsgemäßen Fräsverfahren auch sehr anspruchsvolle Konturen gefertigt werden können. Dies wird durch die spezielle Kinematik, d.h. die Bewegungsformen des Fräswerkzeugs 1 relativ zum Bauteil 7 möglich, wobei auch das Bauteil bewegt werden kann. Das Fräswerkzeug 1 in Gestalt eines Schaftfräsers mit zylindrischer Außenkontur rotiert zentrisch um seine eigene Achse, wie in Figur 1 mittels Pfeil angedeutet, im Uhrzeigersinn. Zusätzlich führt das Fräswerkzeug 1 eine exzentrische Kreisbewegung 13 aus, welche als durchgezogener Kreis gezeichnet ist. Der Drehsinn dieser Kreisbewegung 13 verläuft gegen den Uhrzeigersinn, so dass sich für das Fräswerkzeug 1 ein sogenanntes Gleichlauffräsen ergibt. Der Durchmesser der Kreisbewegung 13 wird so variiert, das die gesamte Breite der Vertiefung erfasst wird, ggf. abzüglich eines beidseitigen Wandaufmaßes für eine sich später anschließende Endbearbeitung. Eine weitere Bewegungsform ist eine translatorische Vorschubbewegung 14 auf gerader und/oder gekrümmter Bahn. Der Vorschub v je Kreisbewegung 13 ist anhand zweier in Richtung 14 versetzter, gestrichelter Kreise dargestellt. Während der Vorschubbewegung 14 kann die Kreisbahnachse des Fräswerkzeugs 1 bedarfsweise auch räumlich geschwenkt werden. Dies ist z.B. bei der Fertigung von Radialverdichtern und -turbinen erforderlich.

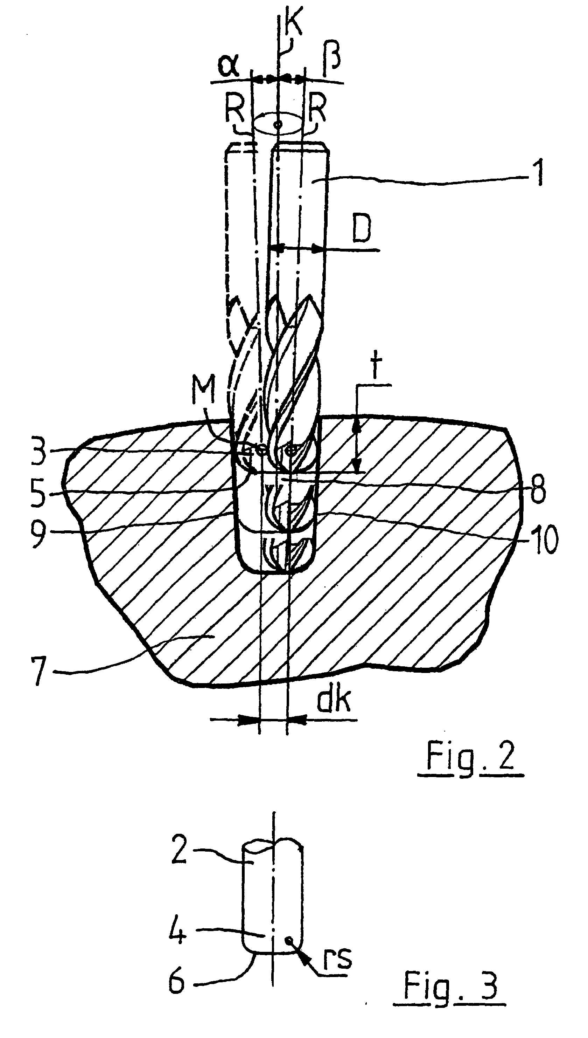

Aus Figur 2 sind weitere Details erkennbar. Das Fräswerkzeug 1 gemäß Darstellung ist ein sogenannter Kugelfräser mit einer halbkugelförmigen Spitzenkontur 5, deren Mittelpunkt mit M bezeichnet ist. Die Tiefenzustellung t für einen ersten Bearbeitungsvorgang ist wiedergegeben, ebenso sind zwei weitere Zustellungspositionen angedeutet. Das maximal mögliche Verhältnis der Tiefenzustellung zum Fräswerkzeugdurchmesser D dürfte etwa bei einem Wert "2" liegen. Man erkennt in Figur 2 weiterhin die Achse R des Fräswerkzeuges 1, die Kreisbahnachse K der exzentrischen Werkzeugbewegung und den Durchmesser dk der Kreisbewegung, der hier, genau genommen, nur für die Fräserspitze 3 gilt. Da die Seitenwände 9,10 der Vertiefung 8 beide nicht parallel zur Drehachse K stehen, d.h. nicht senkrecht auf dem Grund der Vertiefung 8, wird dem Fräswerkzeug 1 eine zusätzliche Taumelbewegung auferlegt. Diese erfolgt periodisch bei jeder Kreisbewegung um die Kreisbahnachse K. Bei Annäherung des Fräswerkzeuges 1 an die Seitenwand 9 wird dessen Achse R um einen Winkel α bezüglich des Mittelpunktes M geschwenkt, bei Annäherung an die Seitenwand 10 um einen Winkel β. Die Winkel werden so gewählt, dass der Fräswerkzeugumfang die jeweilige Seitenwand möglichst konturnah bearbeitet. Die Winkel α und β können ortsabhängig sein, d.h. mit dem Vorschub variieren, sie können auch tiefenabhängig sein, d.h. mit der Tiefenzustellung variieren. Bei einfachen Vertiefungen mit senkrechten Seitenwänden ist die genannte Taumelbewegung nicht erforderlich. Die Taumelbewegung führt mit zunehmendem Abstand von der Fräserspitze in Richtung Schaft zu einer Verzerrung der Kreisbewegung um die Achse K in Richtung Ellipse oder einer ähnlichen, geschlossenen Kurve. Falls die zu bearbeitenden Seitenwände überall eine konstante Neigung zur Vertikalen aufweisen, wäre es auch denkbar, die Achse R des Fräswerkzeuges 1 auf einer gedachten Kegelfläche mit der Kreisbahnachse K als Kegelachse - unter konstantem Winkel-"taumeln" zu lassen.

Figur 3 zeigt stark vereinfacht ein Fräswerkzeug 2 mit einer alternativen Spitzenkontur. Anstelle einer Halbkugel - wie in Figur 2- weist die Fräserspitze 4 um die Achse herum einen zunächst ebenen Bereich auf, der unter einem Übergangsradius rs zum Fräserumfang hin verläuft. Wichtig ist im Grunde nur, dass keine kerbenerzeugenden Ecken im Bereich der Fräserspitze vorhanden sind. Die genaue Spitzenkontur ist im Einzelfall zu optimieren.

## Patentansprüche

1. Fräsverfahren zur Fertigung von Bauteilen aus schwer zerspanbaren Werkstoffen für Turbomaschinen, Luft- und Raumfahrzeuge unter Erzeugung von Vertiefungen mit einer oder mehreren Seitenwänden, insbesondere zur Fertigung von integral beschaufelten Rotoren in Axial- und/oder Radialbauart, wobei die Vertiefungen die Strömungskanäle, die Seitenwände die Schaufeloberflächen bilden, und als rotierendes Fräswerkzeug (1,2) ein an seinem Umfang und an seiner Spitze schneidender Schaftfräser mit einer zumindest zum Umfang hin gerundeten Spitzenkontur (5,6) verwendet wird, **dadurch gekennzeichnet**
**dass** das Fräswerkzeug (1,2) zusätzlich zur zentrischen Rotation um seine Achse (R) eine exzentrische Kreisbewegung (13) um eine von seiner Achse (R) beabstandete Kreisbahnachse (K) ausführt, wobei der Drehsinn der Rotation dem Drehsinn der Kreisbewegung (13) entgegengesetzt ist, und die Drehzahl der Rotation erheblich höher als die Drehzahl der Kreisbewegung (13) ist, und
**dass** die Kreisbahnachse (K) einschließlich des sich exzentrisch um sie herum bewegenden Fräswerkzeuges (1,2) quer zu ihrer Längsrichtung eine translatorische Vorschubbewegung (14) auf einer geraden und/oder gekrümmten Bahn mit oder ohne Schwenkbewegung ausführt.

2. Fräsverfahren nach Anspruch 1, **dadurch gekennzeichnet, dass** die Achse (R) des Fräswerkzeuges (1,2) zur Anpassung an nicht-vertikale Seitenwände (9,10) bedarfsweise während der Kreisbewegung (13) um die Kreisbahnachse (K) periodisch um einen Punkt (M) im Bereich der Fräserspitze (3) zur Erzeugung einer Taumelbewegung mit variierender Neigung (α,β) der Achse (R) geschwenkt wird.

3. Fräsverfahren nach Anspruch 1 oder 2, **dadurch gekennzeichnet, dass** als Fräswerkzeug (1,2) ein Kugelfräser in Form eines Schaftfräsers mit einer halbkugelförmigen Spitzenkontur (5), oder ein Schaftfräser mit einer im mittleren Bereich ebenen, randseitig mit einem Übergangsradius (rs) zum Umfang hin verlaufenden Spitzenkontur (6) verwendet wird.

4. Fräsverfahren nach einem der Ansprüche 1 bis 3 zur Erzeugung von nutartigen Kanälen mit zwei sich gegenüberliegenden Seitenwänden im konstantem oder variablem Abstand, **dadurch gekennzeichnet, dass** der konstante oder variable Durchmesser (dk) der Kreisbewegung um die Kreisbahnachse (K), ohne Berücksichtigung einer überlagerten Taumelbewegung des Fräswerkzeuges (1,2), der örtlichen Nenn-Kanalbreite abzüglich eines beidseitigen Endbearbeitungsaufmaßes sowie abzüglich des Fräswerkzeugdurchmessers (D) entspricht.

5. Fräsverfahren nach einem der Ansprüche 1 bis 4, **dadurch gekennzeichnet, dass** die Bearbeitung hinsichtlich ihrer Kenngrößen einer Schlichtbearbeitung entspricht, mit Merkmalen wie hoher Schnittgeschwindigkeit, niedriger Werkzeugbelastung und geringem Werkzeugverschleiß.

6. Fräsverfahren nach Anspruch 5, **dadurch gekennzeichnet, dass** der translatorische Vorschub (v) ca. 0,5 bis 1,0 mm je Kreisbewegung (13) um die Kreisbahnachse (K) beträgt.

7. Fräsverfahren nach Anspruch 5 oder 6, **dadurch gekennzeichnet, dass** die Tiefenzustellung (t) in Richtung der Kreisbahnachse (K) zwischen zwei aufeinanderfolgenden Bearbeitungsschritten maximal etwa dem doppelten Fräswerkzeugdurchmesser (D) entspricht.

8. Fräsverfahren nach einem der Ansprüche 1 bis 7, **gekennzeichnet durch** die Verwendung zum Fräsen von taschenartigen Vertiefungen bzw. von an Flanschflächen, Erhebungen (Bosses), Anschlussstutzen etc. angrenzenden Zwischenräumen an Gasturbinengehäusen bzw. an Strukturelementen von Luft- und Raumfahrzeugen, wie Rippen, Spanten, Holmen, Stringern, Beplankungen etc..

## Claims

1. A milling process for the manufacture of components from hard-to-machine materials for turbo-engines, aircraft and spacecraft producing recesses with one or more lateral walls, in particular for the manufacture of integrally bladed rotors of axial and/or radial design, the recesses forming the flow channels and the lateral walls forming the blade surfaces, and an end milling cutter which cuts both at the tip and around the periphery and has a tip contour (5, 6) which is rounded at least towards its periphery being used as a rotating milling tool (1,2),
**characterised in that**
in addition to a centrical rotation about its axis (R), the milling tool (1, 2) also executes an excentric circular movement (13) about an orbital axis (K) positioned at a distance from its own axis (R), the direction of rotation running counter to the direction of the circular movement (13) and the speed of rotation being considerably higher than the speed of the circular movement (13), and the orbital axis (K) including the milling tool (1, 2) which moves around it eccentrically executes a translational forward feed movement (14) at right angles to its longitudinal axis on a straight and/or curved path with or without a pivoting movement.

2. A milling process in accordance with claim 1,
**characterised in that**
in order to adjust to non-vertical lateral walls (9, 10) the axis (R) of the milling tool (1, 2) is periodically pivoted about a point (M) in the area of the tip (3) of the milling device (1,2) as required during the circular movement (13) about the orbital axis (K) in order to generate a tumbling movement with varying inclination (α, β) of the axis (R).

3. A milling process in accordance with claim 1 or 2,
**characterised in that**
a spherical cutter in the form of an end milling cutter with a hemispherical tip contour (5) or an end milling cutter with a tip contour (6) which is flat in the central area and runs to the periphery with a transitional radius (rs) at the edges is used as the milling tool (1, 2).

4. A milling process in accordance with one of claims 1 to 3 for creating groove-like channels with two opposing lateral walls a constant or variable distance apart,
**characterised in that**
the constant or variable diameter (dk) of the circular movement about the orbital axis (K) corresponds to the local nominal channel width less overmeasure for final machining on both sides and less the diameter (D) of the milling machine (1, 2), without taking into account a superimposed tumbling movement of the milling tool (1,2).

5. A milling process in accordance with one of claims 1 to 4,
**characterised in that**
in terms of its characteristic values the machining process represents a finishing process with features such as high cutting speed, low tool load and low tool wear.

6. A milling process in accordance with claim 5,
**characterised in that**
the translational forward feed (v) is approx. 0.5 to 1.0 mm per circular movement (13) about the orbital axis.

7. A milling process in accordance with claim 5 or 6,
**characterised in that**
the depth adjustment (t) towards the orbital axis (K) between two consecutive machining steps is no more than approximately twice the diameter (D) of the milling tool (1, 2).

8. A milling process in accordance with one of claims 1 to 7,
**characterised by**
its use for the milling of pocket-like recesses or gaps adjoining flange surfaces, bosses, connectors, etc. on gas turbine housings or on structural elements of aircraft and spacecraft, such as ribs, frames, spars, stringers, planking, etc.

## Revendications

1. Procédé de fraisage pour la fabrication de pièces en matériau à usinage difficile, destinées à des turbomoteurs, à la construction aéronautique et spatiale, avec réalisation de creux à une ou plusieurs parois latérales, en particulier pour la fabrication de rotors à aubage intégral en mode de construction axial et/ou radial, les creux formant les canaux d'écoulement, les parois latérales formant les surfaces des aubes, et l'outil de fraisage rotatif (1, 2) utilisé est une fraise cylindrique à deux tailles, sur son profil et en bout, et avec un bout (5, 6) à contour arrondi au moins vers la périphérie, **caractérisé en ce que** l'outil de fraisage (1, 2) effectue, en plus du mouvement de rotation centré autour de son axe (R), un mouvement circulaire excentré (13) autour d'un axe de la trajectoire circulaire (K) écarté de son axe (R), le sens du mouvement de rotation étant opposé au sens du mouvement circulaire (13), et la vitesse de rotation du mouvement de rotation étant nettement supérieure à la vitesse de rotation du mouvement circulaire (13), et **en ce que** l'axe de la trajectoire circulaire (K), y compris l'outil de fraisage (1, 2) entraîné dans un mouvement excentré autour de celui-ci, effectue, transversalement à sa direction longitudinale, un mouvement d'avance (14) par translation sur une trajectoire droite et/ou courbe avec ou sans mouvement de pivotement.

2. Procédé de fraisage selon la revendication 1, **caractérisé en ce que**, en cas de besoin pendant le mouvement circulaire (13) autour de l'axe de la trajectoire circulaire (K), l'axe (R) de l'outil de fraisage (1, 2), en vue de s'ajuster aux parois latérales (9, 10) non verticales, pivote périodiquement autour d'un point (M) dans la zone en bout de la fraise (3) pour générer un mouvement oscillant avec inclinaison variable (α, β) de l'axe (R).

3. Procédé de fraisage selon la revendication 1 ou 2, **caractérisé en ce que** l'outil de fraisage (1, 2) utilisé est une fraise sphérique en forme de fraise cylindrique avec un bout (5) à contour semi-sphérique, ou une fraise cylindrique avec un bout (6) à contour plat dans la partie centrale, s'étendant du côté du bord vers la périphérie avec un rayon de transition (rs).

4. Procédé de fraisage selon l'une quelconque des revendications 1 à 3 pour la réalisation de canaux en forme de gorges à deux parois latérales, disposées face à face à distance constante ou variable, **caractérisé en ce que** le diamètre (dk) constant ou variable du mouvement circulaire autour de l'axe de la trajectoire circulaire (K), sans tenir compte d'un mouvement oscillant superposé de l'outil de fraisage (1, 2), correspond à la largeur nominale locale des canaux moins une surépaisseur d'usinage final des deux côtés, ainsi que moins le diamètre (D) de l'outil de fraisage.

5. Procédé de fraisage selon l'une quelconque des revendications 1 à 4, **caractérisé en ce que** l'usinage, compte tenu de ses paramètres, correspond à un usinage de finition, avec des caractéristiques telles qu'une vitesse de coupe élevée, une faible sollicitation de l'outil et une faible usure de l'outil.

6. Procédé de fraisage selon la revendication 5, **caractérisé en ce que** le mouvement d'avance (v) par translation est égal à environ 0,5 à 1,0 mm par mouvement circulaire (13) autour de l'axe de la trajectoire circulaire (K).

7. Procédé de fraisage selon la revendication 5 ou 6, **caractérisé en ce que** le mouvement d'approche en profondeur (t) en direction de l'axe de la trajectoire circulaire (K) entre deux étapes de fraisage consécutives, correspond au maximum à environ deux fois le diamètre (D) de l'outil de fraisage.

8. Procédé de fraisage selon l'une quelconque des revendications 1 à 7, **caractérisé par** l'utilisation pour le fraisage de creux de type poche ou d'intervalles adjacents aux surfaces de brides, aux bosses, aux tubulures de raccordement, etc. sur des carters de turbines à gaz ou sur des éléments de structure pour avions et véhicules spatiaux, tels que des cannelures, des membrures, des longerons, des raidisseurs, des revêtements, etc.
